(19) Europäisches Patentamt
European Patent Office
Office européen des brevets

(11) EP 0 832 139 B1

# (12) EUROPÄISCHE PATENTSCHRIFT

(45) Veröffentlichungstag und Bekanntmachung des Hinweises auf die Patenterteilung:
**07.04.1999 Patentblatt 1999/14**

(21) Anmeldenummer: **96922805.5**

(22) Anmeldetag: **13.06.1996**

(51) Int Cl.[6]: **C08F 20/22**, C08F 20/28

(86) Internationale Anmeldenummer:
**PCT/EP96/02561**

(87) Internationale Veröffentlichungsnummer:
**WO 97/00272 (03.01.1997 Gazette 1997/02)**

## (54) POLYMERISATE, DEREN HERSTELLUNG UND VERWENDUNG

POLYMERS, THEIR PRODUCTION AND THEIR USE

POLYMERES, LEUR PREPARATION ET LEUR UTILISATION

(84) Benannte Vertragsstaaten:
**AT BE CH DE ES FR GB IT LI NL**

(30) Priorität: **14.06.1995 DE 19521695**

(43) Veröffentlichungstag der Anmeldung:
**01.04.1998 Patentblatt 1998/14**

(73) Patentinhaber: **Clariant Finance (BVI) Limited**
**Road Town, Tortola (VG)**

(72) Erfinder: **DANNER, Bernard**
**F-68400 Riedisheim (FR)**

(74) Vertreter: **D'haemer, Jan Constant et al**
**Clariant International Ltd.,**
**Rothausstrasse 61**
**4132 Muttenz 1 (CH)**

(56) Entgegenhaltungen:
**FR-A- 2 628 745** **GB-A- 636 322**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 832 139 B1

**Beschreibung**

Bei der Peroxydbleiche von Fasermaterial, insbesondere von Cellulosefasermaterial, werden zur Erhöhung der Bleichausbeute, d.h. zur Vermeidung einer vorzeitigen Zersetzung des Peroxydbleichmittels - vor allem Wasserstofiperoxyd - Stabilisatoren verwendet, welche auch als Stammlösungen und, vor allem für kontinuierliche Bleichverfahren, auch als Verstärkerflotten formuliert werden können; die Verstärkerflotten können, je nach Verfahren, eine unterschiedliche Alkalinität aufweisen und können auch sehr stark alkalisch sein, z.B. einer Alkalinität die 0,2N bis 8N NaOH entspricht. Bei den eingesetzten Stabilisatoren ist es erwünscht, daß sie auch bei hohen Alkalinitäten beständig seien. Da die Stabilisatoren nur als Hilfsmittel eingesetzt werden, d.h. auf das Substrat nicht aufziehen sollen oder nur labil aufziehen sollen und schlußendlich im Abwasser vorhanden sind, ist es nun angestrebt, daß diese Hilfsmittel biologisch abbaubar seien.

Aus der US-A-4 363 699 ist es bekannt, Textilmaterial oder Papier in Gegenwart von bestimmten Natrium Poly-α-hydroxyacrylaten mit Wasserstoffperoxyd alkalisch zu bleichen. In der US-A-4 916 699 werden Poly-α-hydroxyaaylate mit hoher Alkafibeständigkeit beschrieben, die auch in alkalischen Stammlösungen und Verstärkerflotten formuliert werden können. In der DE-A-43 44 029 sind Copolymerisate, die aus bestimmten Mono- oder Disacchariden und bestimmten ungesättigten Sulfonsäuren oder Dicarbonsäuren und monoäthylenisch ungesättigten $C_{3-10}$-Carbonsäuren (genannt sind Acrylsäure und Methacrylsäure) oder aus bestimmten Mono- oder Disacchariden und Acrylsäure stammen, als Dispergiermittel und Cobuilder oder Sequestriermittel beschrieben; diese Copolymerisate haben keine ausreichende stabilisierende Wirkung auf Peroxybleichmittel (d.h. daß im Laufe des Bleichverfahrens die durch das Alkali hervorgerufene Zersetzung des Peroxyds dadurch nicht genügend gehemmt werden kann, so daß ein wesentlicher Anteil des Peroxyds vorzeitig, d.h. weit vor Abschluß des Bleichverfahrens zersetzt ist und folglich seine Bleichwirkung nicht entfalten kann), und so wird für die Peroxydbleiche empfohlen, das Copolymerisat mit Stabilisatoren für Perverbindungen zu kombinieren. Es ist zwar auch möglich ohne die Verwendung eines Stabilisisators mit Peroxyd zu bleichen, aber die Verwendung eines Stabilisators erhöht wesentlich die Ausbeute, da dadurch eine vorzeitige Zersetzung des Peroxyds vermieden wird, was in alkalischen Peroxydbleichflotten, besonders in konzentrierteren alkalischen Bleichflotten, wie solche die in Klotzverfahren verwendet werden, von besonderer Wichtigkeit ist.

Es wurde nun gefunden, daß die unten definierten Polymerisate (P), welche die Monomereinheiten (a) und (s) enthalten, wobei die Anwesenheit von aufwendigen sulfogruppenhaltigen Monomereinheiten nicht nötig ist, überraschend gut den obigen Anforderungen entsprechen, und zwar nicht nur bezüglich biologischer Abbaubarkeit, sondern auch bezüglich Beständigkeit, besonders unter stark alkalischen Bedingungen, z.B. ≥ 0.2N NaOH, oder auch ≥ 0.5N NaOH, vomehmlich ≥ 2N NaOH, und Wirksamkeit zur Stabilisierung von Peroxyverbindungen in der alkalischen Peroxydbleiche (insbesondere in Klotzflotten und in Stammlösungen), und zwar auch ohne die Anwesenheit zusätzlicher Sequestriermittel oder anderer Stabilisatoren.

Die Erfindung betrifft die Polymerisate (P), deren Herstellung und Verwendung, sowie die entsprechenden (P)-haltigen Präparate und alkalischen Stammlösungen wie sie für Bleichflotten geeignet sind, sowie die entsprechenden (P)-haltigen Bleichflotten.

Ein erster Gegenstand der Erfindung ist also ein Polymerisat (P) auf (Co)poly-a-hydroxyacrylsäurebasis, gegebenenfalls in lactonisierter Form oder in Salzform, das durch einen Gehalt an

(s) mindestens einer Kohlehydrateinheit
und (a) mindestens einer 2-Hydroxy-2-carboxyäthylen-1,2-Einheit

gekennzeichnet ist, oder ein Gemisch solcher Polymerisate (P).

Die erfindungsgemäßen Polymerisate (P) sind durch Polymerisation von mindestens einem Vinylmonomeren (A), welches die Monomereinheiten (a) liefert und welches vornehmlich eine α-Halogenacrylsäure oder ein Salz davon ist, und gegebenenfalls mindestens einem weiteren Vinylmonomeren (B), in Gegenwart von mindestens einem gegebenenfalls modifiziertem Kohlehydrat (S), welches die Einheiten (s) liefert, unter sauren Bedingungen, und gegebenenfalls Umsetzung des Polymerisationsproduktes mit mindestens einer Base zur Salzbildung, erhältlich.

Die Einheiten (a) entsprechen in der nicht-lactonisierten Säureform der Formel

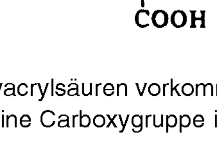

(I),

wie sie z.B. in Poly-α-hydroxyacrylsäuren vorkommen (und daher auch "α-Hydroxyacrylsäureeinheiten" genannt werden). Gegebenenfalls kann eine Carboxygruppe in (a) mit einer geeigneten Hydroxygruppe lactonisiert sein oder sie

kann in Salzform vorliegen.

Als Vinylmonomere (A) können Monomere verwendet werden, die bei ihrer Polymerisation zu entsprechenden 2-Hydroxy-2-carboxyäthylen-1,2-Einheiten führen, vornehmlich α-Hal-acrylsäure worin Hal Chlor oder Brom bedeeutet, d.h. α-Chloracrylsäure oder α-Bromacrylsäure, oder ein wasserlösliches Salz davon. Vorzugsweise wird als (A) ($A_1$) eingesetzt, d.h. α-Chloracrylsäure gegebenenfalls in Salzform. Gewünschtenfalls kann eine Vorstufe von ($A_1$) eingesetzt werden, z.B. α,β-Dichlorpropionsäure oder ein funktionelles Derivat davon (z.B. Methylester oder Chlorid), welche vor der Polymerisation zu ($A_1$) dehydrochloriert und erfoderlichenfalls verseift wird.

Als weitere Vinylmonomeren (B) kommen vornehmlich niedrigmolekulare, anionische oder nicht-ionische Monomeren in Betracht, insbesondere ($B_1$) d.h. α,β-äthylenisch ungesättigte aliphatische Carbonsäuren, die vorzugsweise 3 bis 6 Kohlenstoffatome enthalten, beispielsweise Acrylsäure, Methacrylsäure, Maleinsäure, Itaconsäure, Aconitsäure, Fumarsäure oder Citraconsäure.

Die Monomeren (A) und (B), insbesondere ($A_1$) und ($B_1$), können in Form der freien Säure oder, vorzugsweise, mindestens teilweise in Form von wasserlöslichem Salz verwendet werden, wobei, wenn sie als Salze eingesetzt werden, diese im sauren Reaktionsmedium in die Säureform übergehen. Es können beispielsweise Ammoniumsalze oder vorzugsweise Alkalimetallsalze (z.B. Li-, Na- oder K-Salze) verwendet werden, besonders bevorzugt Natriumsalze der genannten Monomeren. Die Monomeren (A) und (B), insbesondere ($A_1$) und ($B_1$) werden vorteilhaft in solchen Mengenverhältnissen eingesetzt, daß (A) mindestens 50 Mol-%, d.h. 50 bis 100 Mol-% von [(A) + (B)] ausmacht, bzw. so daß (a) 50 bis 100 Mol-% von [(a) + (b)] ausmacht, wobei (b) die durch Umsetzung von (B) eingeführten Monomereinheiten sind. Vorteilhaft beträgt der Anteil an (A) 80 bis 100 Mol-%, besonders bevorzugt 100 Mol-% von [(A) + (B)] bzw. der Anteil an (a) beträgt vorteilhaft 80 bis 100 Mol-%, vorzugsweise 100 Mol-% von [(a) + (b)], d.h. vorzugsweise wird kein (B) eingesetzt.

Als gegebenenfalls modifizierte Kohlehydrate (S) kommen beliebige solche Verbindungen in Betracht, die mindestens drei Kohlenstoffatome enthalten und Polyolcharakter aufweisen, d.h. mindestens drei Hydroxygruppen pro Kohlenstoffkette oder -ring enthalten, und in Wasser löslich, suspendierbar oder quellbar sind. Vornehmlich sind als (S) natürliche Saccharide oder Modifikationsprodukte davon gemeint, d.h. Saccharide die aus tierischen oder pflanzlichen Produkten (z.B. aus der Aufarbeitung von Milch, Honig oder Pflanzenteilen) gewonnen werden, oder einfache Modifikationsprodukte davon, z.B. enzymatisch oder chemisch modifizierte (z.B. durch Hydrolyse, Hydrierung, Oxydation, Teilverätherung oder -veresterung und/oder Derivatisierung), soweit der wesentliche Polyolcharakter des Saccharids erhalten bleibt. Es können zwar auch synthetische Saccharide eingesetzt werde, vornehmlich Polymerisationsprodukte von Mono- oder/und Disacchariden wie sie durch Polymerisation in wäßriger Lösung herstellbar sind, vorzugsweise sind die Saccharide (S) aber natürliche Saccharide oder einfache Modifikationsprodukte davon.

Als Kohlehydrate (S) kommen vorteilhaft Mono-, Oligo- oder Polysaccharide in Betracht, deren Monomereinheiten 4 bis 7, vorzugsweise 5 oder 6, Kohlenstoffatome enthalten. Als modifizierte Kohlehydrate (S) kommen vornehmlich solche Kohlehydrate in Betracht, in welchen ein oder zwei funktionelle Gruppen chemisch modifiziert worden sind, z.B. durch Reduktion zu Polyolen oder Desoxyzuckern, durch Oxydation zu Mono- oder Dicarbonsäuren oder durch Alkylierung z.B. mit unsubstituiertem oder substituiertem niedrigmolekularem Alkyl, vornehmlich Alkylierung mit unsubstituiertem $C_{1-4}$-Alkyl, insbesondere Methyl oder Butyl, Carboxyalkylierung, vornehmlich Carboxymethylierung (z.B. durch Umsetzung mit Chloressigsäure), Anlagerung von Epoxyden (z.B. Äthylenoxyd) zu Oxalkylierungsprodukten, oder Umsetzung mit gegebenenfalls substituierten Chlorhydrinen, oder durch Acylierung z.B. mit Acylresten niedrigmolekularer Carbonsäuren, vornehmlich von $C_{2-4}$-Carbonsäuren, insbesondere Acetyl, oder Derivatisierung, soweit pro Kohlenstoffkette oder -ring mindestens drei Hydroxygruppen mit Kohlehydratcharakter vorhanden sind.

Es kommen als (S) beliebige Mono-, Oligo- oder Polysaccharide oder einfache Modifikationsprodukte davon oder Gemische davon in Betracht, insbesondere

($S_1$) Monosaccharide,
($S_2$) Oligosaccharide,
($S_3$) Polysaccharide
und ($S_4$) modifizierte Saccharide.

Als ($S_1$) eignen sich z.B. $C_{4-6}$-Monosaccharide, wie z.B. Erythrose, Threose, Xylose, Ribose, Arabinose, Lyxose, Glukose, Mannose, Gulose, Galactose, Fructose, Allose, Altrose, Idose, Talose, und deren Gemische. Als ($S_2$) eignen sich offenkettige oder cyclische Oligosaccharide, wie z.B. Lactose, Maltose, Cellobiose, Raffinose, Gentiobiose, Trehalose, Melezitose, Dextrine und Cyclodextrine (α, β und/oder γ) und deren Gemische. Als ($S_3$) eignen sich. beliebige Polysaccharide die in Wasser löslich, suspendierbar oder quellbar sind, vornehmlich Stärkepolysaccharide, z.B. ($S_{31}$) im wesentlichen lineare Polysaccharide die in Stärken vorkommen, insbesondere Amylose, und Abbauprodukte (vorzugsweise Hydrolyseprodukte) davon, z.B. Sirup oder Dextrine, sowie Gemische solcher Polysaccharide, und ($S_{32}$) im wesentlichen lineare sonstige Polysaccharide sowie verzweigte Polysaccharide, z.B. Cellulose, Xylane, Arabane und Galactane. Gegebenenfalls können die Polysaccharide mindestens teilweise enzymatisch oder/und säurehydrolytisch verändert, z.B. abgebaut sein (z.B. zu Oligosacchariden). Als ($S_4$) eignen sich einfach modifizierte Saccharide (Mono- oder vorzugsweise Oligo- oder Polysaccharide), vornehmlich Reduktionsprodukte von Mono- oder Oligosacchariden zu entsprechenden Polyolen oder Desoxyzuckern, Oxydationsprodukte zu Carbonsäuren, Acylierungsprodukte oder Alkylierungsprodukte, oder auch natürlich vorkommende Carbonsäuren, Polyole, alkylsubstituierte Saccharide oder sonstige Derivate, z.B. sulfogruppenhaltige Saccharide. Als (S,) kommen vornehmlich die folgenden modifizierten Saccharide in Betracht: ($S_{41}$) einfache Polyole, z.B. Alditole, vorzugsweise $C_{5-6}$-Polyole, z.B. Sorbit oder Mannit, ($S_{42}$) alkylsubstituierte Saccharide, z.B. Inositole und Alkylglykoside, z.B. Butyl- oder Methylglukoside, ($S_{43}$) Carbonsäuren gegebenenfalls in Salzform, vornehmlich Aldon- oder Uronsäuren, z.B. Gluconsäure, Gulonsäure, Glucoheptonsäure, Glucuronsäure, sowie Algin- und Pectinsäuren und deren Teildecarboxylierungsprodukte, und ($S_{44}$) sonstige Saccharidderivate, z.B. sulfathaltige natürliche Produkte, acylierte Saccharide, mit substituiertem Alkyl alkylierte Saccharide (z.B. carboxyalkylierte, oxalkylierte oder mit gegebenenfalls substituierten Chlorhydrinen umgesetzte), modifizierte Pectine oder derivatisierte Polysaccharide. Als Pectine kommen allgemein bekannte Pectine in Betracht, z.B. aus Fruchtschalen oder vornehmlich solche, wie sie in Stärken, z.B. in nativen Stärkemehlen, vorkommen, sowie enzymatisch modifizierte Derivate davon, z.B. enzymatisch verflüssigte Derivate von Pectinen aus Stärken, oder auch synthetisches Amylopectin.

Die Polysaccharide ($S_3$), vornehmlich die Stärkepolysaccharide ($S_{31}$), können auf an sich übliche Weise mit bekannten Enzymen modifiziert werden, z.B. mit Hydrolasen, vornehmlich Glykosidhydrolasen, insbesondere mit Amylasen, vorzugsweise $\alpha$-Amylasen, oder/und können durch Säumhydrolyse modifiziert werden, vorteilhaft durch Einwirkung von starken Mineralsäuren, vorzugsweise Schwefelsäure, Phosphorsäure oder Salzsäure, oder starken Carbonsäuren, vorzugsweise Citronensäure, Ameisensäure, Essigsäure, Phthalsäure und Benzoesäure.

Besonders vorteilhaft werden als (S) für die erfindungsgemäßen Polymerisate (P) Stärkekomponenten eingesetzt, wie sie in üblichen Stärkemehlen vorkommen (z.B. aus Pflanzenteilen gewonnen, wie Hülsenfrüchten, Getreide, Knollenwurzeln, Palmenmark oder Algen), beispielsweise Reisstärke, Maisstärke, Kartoffelstärke, Tapiokastärke, Sojastärke, Guaran, Carrageen, Carubin, Agar oder Ghatti Gummi und Gemische davon.

Nach einer vorteilhaften Ausführungsform der Erfindung werden als (S) (S') d.h. technische, gegebenenfalls gereinigte oder/und enzymatisch modifizierte Stärken, z.B. in Form von Stärkemehlen, eingesetzt.

Das erfindungsgemäße Verfahren zur Herstellung der Polymerisate (P) erfolgt unter sauren Bedingungen und führt vorerst zu einem sauren Polymerisat (P1), welches durch Umsetzung mit einer Base zu einer entsprechenden Salzform (P2) umgesetzt werden kann.

Das Verfahren zur Herstellung der sauren Polymerisate (P1) oder eines Gemisches davon ist vorzugsweise dadurch gekennzeichnet, daß man ($A_1$) und gegebenenfalls ($B_1$) in wäßrigem, saurem Medium, in Gegenwart von (S), vorzugsweise ($S_3$), besonders bevorzugt ($S_{31}$), polymerisiert.

Die Polymerisation erfolgt vorteilhaft in wäßrigem Medium und bei pH-Werten, die vorteilhaft $\leq 6$ sind, vorzugsweise $\leq 4$, insbesondere im Bereich von 0 bis 6, bevorzugt 0,1 bis 4, liegen. Der pH wird vorteilhaft mit einer starken Mineralsäure, z.B. Phosphorsäure oder vorzugsweise Schwefelsäure, oder einer starken Carbonsäure, z.B. Citronensäure, eingestellt. Die Konzentration der Monomeren, d.h. (A) und gegebenenfalls (B), und der Komponenten (S) kann in weiten Bereichen variieren und wird zweckmäßig so gewählt, daß eine echte Lösung von ($S_1$) oder eine echte oder kolloidale Lösung von ($S_2$) oder ($S_4$) vorliegt, bzw. daß ($S_3$) oder ($S_4$) in suspendierter oder gequollener, dispergierter Form oder als kolloidale Lösung vorliegt, und das Gemisch rührbar ist. Der (S)- und Monomergehalt des Reaktionsgemisches liegt beispielsweise im Bereich von 2 bis 70 Gew.-%, vorteilhaft im Bereich von 5 bis 70 Gew.-%, bevorzugt 10 bis 60 Gew.-%. Die Reaktionstemperatur für die Polymerisation beträgt vornehmlich Werte im Bereich von 20 bis 150°C, vorteilhaft 40 bis 98°C, vorzugsweise 60 bis 90°C. Die Polymerisation is im wesentlichen radikalisch und erfolgt zweckmäßig unter radikalbildenden Bedingungen, z.B. in Gegenwart von radikalbildenden Initiatoren oder unter Einwirkung geeigneter energiereicher Strahlung, wie sie üblicherweise für die Polymerisation zur Herstellung von Poly-$\alpha$-hydroxyacrylsäure eingesetzt werden können; es kommen insbesondere die folgenden Initiatoren bzw. Katalysatoren in Betracht: wasserlösliche Azoverbindungen [besonders 4,4'-Azo-bis-(4-cyanpentansäure) oder 2,2'-Azo-bis-(2-aminodipropan)-dihydrochlorid], Redoxsysteme oder Peroxyverbindungen (insbesondere Diacetylperoxyd, Di-ter.butylperoxyd, tert.Butylhydroperoxyd, tert.Butylperpivalat, Cumolhydroperoxyd, Benzoylhydroperoxyd, Dibenzoylperoxyd, Diisopropylperoxydicarbonat, Natriumperborat, Wasserstoffperoxyd oder Ammonium- oder Alkalimetallperoxydisulfat); es ist auch möglich Cer(IV)-Salze, wie Cer(IV)ammoniumsalze. z.B. Cer(IV)ammoniumsulfat, als Initiatoren einzusetzen, vorzugsweise werden allerdings keine Cer(IV)-Verbindungen eingesetzt. Unter den genannten Polymerisationsinitiatoren sind die Peroxyverbindungen bevorzugt, vornehmlich Ammonium- oder Kaliumperoxydisulfat und Wasserstoffperoxyd, vor allem Wasserstoffperoxyd. Das Wasserstoffperoxyd kann als solches oder als $H_2O_2$-abgebende Verbindung eingesetzt werden, z.B. als Kaliumperoxyd; vorzugsweise wird aber direkt $H_2O_2$ eingesetzt. Die Menge der Initiatoren wird zweckmäßig in Funktion der Monomeren gewählt, insbesondere der Konzentration an (A) und, soweit vorhanden, (B), und deren Molverhältnis zu (S). Das Molverhältnis der Monomeren (A) und (B) zu (S) kann in einem weiten Bereich schwanken, zweckmäßig so, daß durchschnittlich mindestens eine a-Hydroxyacrylsäureeinheit pro Kohlehydrat-Grundmolekül im Endprodukt vorhanden ist. Je nach Molgewicht des Kohlehydratgrundgerüstes im Endprodukt können pro Mol Gesamtmonomeren [(A) + (B)], besonders [($A_1$) + ($B_1$)], vorteilhaft 20 bis 1000, vorzugsweise 30 bis 500, insbesondere 40 bis 300 g Gesamthydroxyverbindungen (S) eingesetzt werden. Pro Mol Kohlehydrateinheit (sl) in (S) werden vorteilhaft 0,5 bis 5, vorzugsweise 0,8 bis 4, besonders bevorzugt 1 bis 3 Mol Gesamtmonomeren [(A) + (B)], insbesondere [($A_1$) + ($B_1$)], eingesetzt. Als Kohlehydrateinheit (s1) im gegebenenfalls modifizierten Ausgangskohlehydrat (S) wird eine offenkettige oder vorzugsweise cyclische, gegebenenfalls modifizierte Kohlehydratgruppe verstanden die pro Gruppe zusammenhängender Kohlenstoffatome mindestens drei Hydroxygruppen als Substituenten trägt und, wenn sie cyclisch ist, ein (vorzugsweise furanosides oder pyranosides) Sauerstoffatom als Ringglied enthält, und wobei die Einheiten (sl) gegebenenfalls miteinander über Sauerstoff verbrückt sein können (z.B. ein Glucosidring wie er in Oligo- oder Polyglukosiden vorkommt). Wenn Wasserstoffperoxyd als Initiator verwendet wird, beträgt die Konzentration davon, bezogen auf die Monomeren (A) und (B) vorteilhaft mindestens 1 g $H_2O_2$ pro Mol [(A) + (B)], z-B. 2 bis 60 g $H_2O_2$ bzw. die äquivalente Menge eines anderen Peroxykatalysators. Die jeweiligen Reaktionsteilnehmer und Initiatoren sowie die Säure können auf einmal oder stufenweise zugegeben werden; eine gute Reaktionskontrolle läßt sich z.B. durch stufenweise Zugabe von Säure und Initiator erzielen. Der Polymerisationsgrad der eingesetzten Monomeren (A) und (B) läßt sich z.B. durch die Menge Peroxyinitiator steuern.

Die enzymatische Behandlung, z.B. mit einer α-Amylase, erfolgt z.B. bei pH-Werten im Bereich von 5 bis 8, bei erhöhter Temperatur, z.B. im Bereich von 50 bis 95°C, und bei Enzymkonzentrationen von 0,5 bis 10 g/l.

Eine enzymatische Behandlung, z.B. von Oligo- oder Polysacchariden bzw. von Pectinen, läßt sich auch in einem Arbeitsgang, in einem selben Reaktionsgefäß, der genannten Polymerisation voransetzen. Die enzymatische Umsetzung kann dann zweckmäßig durch Zugabe der Mineralsäure z.B. bei pH-Werten < 4, abgebrochen werden. Unter den stark sauren Polymerisationsbedingungen kann auch ein gezielter Abbau der eingesetzten Polysaccharide oder Pectine erfolgen.

Durch die sauren Polymerisationsbedingungen entstehen vorerst die sauren Polymerisate (P1), in welchen die α-Hydroxyacrylsäureeinheiten mindestens teilweise in lactonisierter Form vorliegen, und das wenig lösliche Polymerisationsprodukt liegt im sauren Reaktionsmedium als diskontinuierliche Phase, z.B. als Niederschlag oder in suspendierter Form, vor; durch die darauffolgende Behandlung mit einer Base werden die gegebenenfalls lactonisierten α-Hydroxyacrylsäureeinheiten, sowie weitere allfällige Carboxygruppen, in die Salzform übergeführt und dabei werden auch die jeweiligen Lactonringe hydrolysiert, es entsteht dadurch das Polymerisatsalz (P2).

Zur Hydrolyse und Salzbildung können geeignete Basen, gewünschtenfalls in wäßriger Form, zugegeben werden, z.B. Ammoniak, Alkalimetallhydroxyde und/oder niedrigmolekulare Mono-, Di- oder Tri-alkylamine oder -alkanolamine [insbesondere Triäthanolamin oder Triisopropanolamin] und/oder puffernde Alkalimetallsalze, worunter Alkalimetallhydroxyde (Lithium-, Natrium- oder Kaliumhydroxyd) bevorzugt sind, besonders Natriumhydroxyd und Kaliumhydroxyd.

Durch die Salzbildung mit den genannten Basen können die weniger löslichen Polymeren (Pl), welche die α-Hydroxyacrylsäureeinheiten in gegebenenfalls lactonisierter Form enthalten und z.B. in suspendierter Form im wäßrigen sauren Medium enstehen, in eine löslichere Salzform (P2) übergeführt werden, so daß eine Polymerlösung entsteht.

Gewünschtenfalls können die erhaltenen Polymerisate derivatisiert werden, z.B. durch Umsetzung mit Derivatisierungsreagenzien (C), vorzugsweise unter basischen Bedingungen. Als Derivatisierungsreagenzien (C) eignen sich an sich bekannte Verbindungen, vornehmlich Alkylierungsmittel z.B. Halogenide (z.B. Chloressigsäure, Chlorpropionsäure). Die Derivatisierungsumsetzung mit (C) kann auf an sich bekannte Weise, gewünschtenfalls auch im selben Reaktionsmedium, stattfinden, z.B. bei pH-Werten im Bereich von 7,5 bis 10 - vorteilhaft durch Zugabe von Alkalimetallhydroxyd eingestellt - und bei erhöhter Temperatur, z.B. bei 50 bis 95°C.

Durch Wahl der Mengenverhältnisse und der Reaktionsbedingungen können die Länge und Verteilung der (Co)polymerketten bedingt werden. So können die Polymerisate (P) die Einheiten (a) und, falls vorhanden, (b) zur Bildung von (Co)polymeren oder/und Pfropfpolymeren an- oder eingebaut enthalten; bei einer sauren (Teil)hydrolyse der Saccharide (S) kann auch (A) bzw. (B) an die entsprechende Stelle an- bzw. eingebaut werden.

Das Molekulargewicht $\overline{M}_w$ der erhaltenen Polymerisate (P), bezogen auf die Natriumsalzform von (P2), liegt beispielsweise im Bereich von 500 bis 1'000'000, vorteilhaft 500 bis 200'000, vorzugsweise im Bereich von 600 bis 60'000, insbesondere 600 bis 12'000. Die genannten Molekulargewichte verstehen sich als Gewichtsdurchschnitt. Die Polydispersität ist vorteilhaft < 4. Das Molekulargewicht und die Polydispersität können durch Gelpermeationschromatographie gegen normierte Polyacrylsäurestandards ermittelt werden.

Die so hergestellten Polymerisate werden meist in wäßriger Form erhalten; diese wäßrigen Präparate sind an sich, besonders in den obengenannten Konzentrationen (z.B. 2 bis 70 Gew.-%, vorteilhaft 5 bis 70 Gew.-%, vorzugsweise 10 bis 60 Gew.-%), beständig und können, so wie sie hergestellt worden sind, gehandhabt, insbesondere transportiert und verwendet werden, oder sie können auch gewünschtenfalls getrocknet werden, z.B. durch Zerstäuben oder Granulieren, wonach sie für den Gebrauch entsprechend wieder mit Wasser verdünnt werden können.

Die Polymerisate (P) finden ihre Verwendung als Hilfsmittel bei der Behandlung von Fasermaterial, insbesondere als Stabilisatoren für die Peroxydbleiche von cellulosehaltigem Fasermaterial, und ein weiterer Gegenstand

der Erfindung ist ein Verfahren zur Peroxydbleiche von cellulosehaltigem Fasermaterial in Gegenwart von Alkali und von einem Stabilisator, das durch die Verwendung von (P), vorzugsweise von (P2), als Stabilisator gekennzeichnet ist.

Als Alkali eignen sich vornehmlich

(D) Alkalimetallhydroxyde.

Für die Verwendung in der Peroxydbleiche ist es von besonderem Vorteil, (P) bzw. (P2) mit Magnesiumionen zu kombinieren, zweckmäßig durch Versetzen von (P1) oder vorzugsweise (P2) mit

(E) wasserlöslichen Magnesiumsalzen

z.B. mit wasserlöslichen Magnesiumsalzen einer Mineralsäure, vorzugsweise Magnesiumchlorid oder -sulfat, wodurch (P3), d.h. Magnesiumkomplexe oder -komplexsalze von (P) bzw. (P2), entstehen, welche eine besonders ausgeprägte stabilisierende Wirkung in der Peroxybleiche entfalten. Ein besonderer Gegenstand der Erfindung sind die Mg-Komplexe (P3).

(P2) und/oder (P3) sind gut wasserlöslich und auch alkaliverträglich; sie können in Wasser und auch in wäßrigem Alkali, insbesondere in wäßrigen Alkalimetallhydroxydlösungen gelöst werden.

Die erfindungsgemäßen Polymerisate (P), besonders (P2) und/oder (P3) können vorteilhaft als wäßrige konzentrierte Präparate formuliert werden, die (P2) bzw. (P3) und gegebenenfalls weitere Zusätze, insbesondere (E) wie oben definiert, und/oder

(G) ein von (P) verschiedenes Sequestriermittel,

vorzugsweise in den unten beschriebenen Mengenverhältnissen, enthalten. Der (P2)- oder (P3)-Gehalt in den konzentrierten wäßrigen Präparaten liegt, auf (P2) bezogen, z.B. im Bereich von 2 bis 70, vorteilhaft 5 bis 70, vorzugsweise 10 bis 60 Gew.-%, der (E)-Gehalt liegt vorteilhaft im Bereich von 0 bis 20, vorzugsweise 0 bis 10, insbesondere 0 bis 6 Gew.-%, der (G)-Gehalt liegt vorteilhaft im Bereich von 0 bis 50, vorzugsweise 0 bis 20, vornehmlich 0 bis 10, insbesondere 0 bis 4 Gew.-%, der Wassergehalt ist vorteilhaft ≥ 20 Gew.-%, vorzugsweise ≥ 30 Gew.-%.

Für das erfindungsgemäße Bleichverfahren eignen sich im allgemeinen übliche Bleichapparaturen und -systeme und übliche Bleichmethoden, wie sie im allgemeinen für das alkalische Bleichen von Cellulosefasermaterial aus wäßrigem Medium, vor allem in der textilen Vorbehandlung oder bei der Aufarbeitung von Altpapier, gebraucht werden. Zweckmäßig werden die einzusetzenden Bleichflottenkomponenten, vor der Zugabe in die Bleichflotte, in Stammlösungen (auch Verstärkerflotten) formuliert, welche das Alkali (vorzugsweise NaOH) und den Stabilisator (P), vorzugsweise (P2), enthalten. Erforderlichenfalls können diese Stammlösungen (bzw. Verstärkerflotten) noch weitere Zusätze enthalten, wie sie für den entsprechenden Vorgang einzusetzen sind, z.B. ein wasserlösliches Magnesiumsalz (E), z. B. Magnesiumchlorid, zur Einstellung der Wasserhärte bzw. zur Bildung von Mg-Komplexen mit (P) vorzugsweise mit (P2),

(F) Tenside (insbesondere Netzmittel)

und gelegentlich auch weitere Substanzen, wie Gleitmittel, andere vorzugsweise niedrigmolekulare Sequestriermittel (G), optische Aufheller, wie sie für das jeweilige Bleichverfahren gewünscht sind. Das zum Bleichen eingesetzte Peroxyd (H) kann auch in der Stammlösung vorhanden sein oder separat der Flotte zugegeben werden. In einer besonderen Ausführung des Verfahrens können eine oder mehrere der genannten Komponenten, mit Ausnahme des Peroxyds, zusätzlich zu (P) bzw. (P2), gegebenenfalls in Mg-Komplexform (P3), als eine konzentrierte wäßrige Stamm- oder Verstärkerlösung formuliert werden und das Peroxyd kann direkt in die Bleichflotte gegeben werden oder auch, erst kurz vor der Zugabe in die Bleichflotte, der Stammlösung beigemischt werden. Gewünschtenfalls kann allerdings auch das Peroxyd, zusammen mit den übrigen Komponenten, in den konzentrierten Lösungen bereits vorhanden sein.

Ein besonderer Gegenstand der Erfindung sind wäßrige, alkalische, stabilisatorhaltige, vorzugsweise konzentrierte Lösungen, insbesondere Stammlösungen, die durch einen Gehalt an den Komponenten

(P) wie oben definiert, vorzugsweise als (P2) oder (P3),
und (D) Alkalimetallhydroxyd

gekennzeichnet sind, insbesondere solche, die zusätzlich mindestens eine der Komponenten (E), (F) und (G) enthalten; insbesondere aber auch solche, die zusätzlich zu den genannten Komponenten

(H) ein Bleichmittel auf Peroxydbasis

enthalten.

Ein weiterer Gegenstand der Erfindung besteht darin, daß man im erfindungsgemäßen Bleichverfahren die genannten Komponenten in Form der genannten (P) und (D) sowie (E), (F) und/oder (G) und gegebenenfalls (H) enthaltenden Stammlösungen einsetzt.

Die genannten konzentrierten, wäßrigen Lösungen enthalten die Komponente (P), vorzugsweise als (P2) oder (P3), vorteilhaft in Konzentrationen von 1 bis 50 g/l, vorzugsweise 1,4 bis 35 g/l [berechnet als (P2) in Form von Na-Salz].

Die Komponente (D) ist bevorzugt KOH oder insbesondere NaOH und ist vorteilhaft in Konzentrationen von 5 bis 350 g/l, z.B. 80 bis 200 g/l vorhanden; besonders bevorzugt beträgt die Konzentration des Alkalimetallhydroxyds,

insbesondere des NaOH, von 0,2 bis 8N, vorteilhaft 0,5 bis 7 N, vorzugsweise 2 bis 5N NaOH.

Die Komponente (E), welche zweckmäßig ein für die Komplexbildung geeignetes Salz z.B. Magnesiumchlorid ist, wird - falls vorhanden - vorteilhaft in solchen Konzentrationen eingesetzt, wie sie ausreichen, um eine Wasserhärte der Bleichflotte von 3-10°dH, insbesondere 4-8°dH, zu erhalten.

Die Komponente (F) kann je nach Art des Bleichverfahrens erforderlich sein und hat vorteilhaft den Charakter eines Netzmittels [z.B. eines Waschmittels, wenn das Bleichen mit einem Abkochen des Textilmaterials kombiniert wird, oder sie dient zum Benetzen eines in das Bleichbad eingesetzten trockenen Substrates]. Vorzugsweise sind die eingesetzten Netzmittel (F) nicht-ionogen, anionaktiv oder amphoter. Die nicht-ionogenen Tenside sind z.B. Anlagerungsprodukte von Äthylenoxyd und gegebenenfalls Propylenoxyd an entsprechende Alkohole, z.B. Oxoalkohole oder Fettalkohole mit 8 bis 18 (vorzugsweise 9 bis 15) Kohlenstoffatomen, und enthalten z.B. durchschnittlich 2 bis 40 Äthylenoxyeinheiten pro Molekül. In den anionaktiven Tensidmolekülen sind die anionischen Reste vorteilhaft Sulfat-, Sulfonat-, Phosphorsäureester-, Phosphonat- oder Carbonsäure-Gruppen (z.B. Seifen oder Carboxymethylierungsprodukte von nicht-ionogenen Tensiden), die im anionaktiven Tensid enthaltenen entsprechenden lipophilen Reste sind vornehmlich aliphatische oder araliphatische Kohlenwasserstoffreste mit 10 bis 24 Kohlenstoffatomen; gegebenenfalls können die anionaktiven Tenside Alkylenoxyeinheiten enthalten, insbesondere Äthylenoxy und Propylenoxy (z.B. 1 bis 30 Äthylenoxygruppen). Die amphoteren Tenside können z.B. säuremodifizierte Amine sein, wobei die lipophilen Reste solche sein können, wie oben erwähnt, worunter die aliphatischen bevorzugt sind, das Molekül kann gegebenenfalls Alkylenoxyeinheiten enthalten und die Aminogruppen können gegebenenfalls quaterniert sein. Unter den genannten Tensiden (F) sind die nicht-ionogenen und die anionaktiven bevorzugt. Die Konzentration der Tenside hängt vom besonderen Bleichverfahren ab und kann z.B. im Bereich von 0,1 bis 10 g Tensid pro Liter Stammlösung schwanken.

Als Komponente (G) eignen sich vornehmlich niedrigmolekulare Sequestriermittel besonders carbon- oder phosphonsäuregruppenhaltige Aminoverbindungen, insbesondere carboxymethylierte oder phosphonomethylierte aliphatische Di- oder Triamine oder Ammoniak, z.B. Nitrilotriessigsäure Natriumsalz, Äthylendiamintetraessigsäure Natriumsalz, Diäthylentriaminpentaessigsäure Natriumsalz, Dipropylentriaminpentaessigsäure Natriumsalz und Diäthylentriaminpentamethylphosphonsäure Natriumsalz, worunter Nitrilotriessigsäure (u.a auch aufgrund der biologischen Abbaubarkeit) bevorzugt ist. Auch die oben erwähnten Trialkanolamine, vorzugsweise Triäthanolamin, können in den erfindungsgemäßen Präparaten und Flotten eine sequestrierende Wirkung entfalten und als (G) eingesetzt werden, besonders wenn (P2) als Alkalimetallsalz vorliegt. Die Menge an Komponente (G) kann in einem breiten Bereich schwanken und ist vorteilhaft nicht größer als die eingesetzte Menge (P), bzw. (P2) oder (P3). Pro 100 Gewichtsteile (P), bzw. (P2), werden z.B. 0 bis 100, vorteilhaft 0 bis 50, vorzugsweise 0 bis 12 Gewichtsteile (G) eingesetzt.

Die Komponente (H) kann, wie gesagt, direkt in die Bleichflotte gegeben werden oder mit der restlichen Stammlösung, vor der Zugabe in die Bleichflotte, gemischt werden oder von Anfang an in der Stammlösung vorhanden sein. Erfindungsgemäß werden vorteilhaft pro 100 Gewichtsteile der Komponente (H), insbesondere pro 100 Gewichtsteile $H_2O_2$, 1 bis 100, vorzugsweise 2 bis 90, insbesondere 2 bis 60 Gewichtsteile der Komponente (P) (berechnet als Na-Salz) eingesetzt.

Das erfindungsgemäße Verfahren und die erfindungsgemäßen wäßrigen Lösungen eignen sich für beliebige übliche Bleichverfahren aus wäßrigem Medium, in denen Cellulosefasermaterialien in Gegenwart von Alkali mit Peroxyverbindungen, insbesondere mit Wasserstoffperoxyd gebleicht werden, besonders für die Bleiche von Textilmaterial, vornehmlich nach dem Entschlichten und vor dem Färben oder Ausrüsten, vorzugsweise in der textilen Vorbehandlung. Besonders interessant ist das erfindungsgemäße Verfahren für die halbkontinuierliche und kontinuierliche Bleiche von Textilmaterialbahnen oder textilen Fäden, worin die Bleichflotte im Laufe des Bleichverfahrens durch weiteres Zudosieren der Stammlösung oder gegebenenfalls mit Verstärkerflotten stets auf konstante Zusammensetzung und (mit Wasser) auf konstantes Niveau eingestellt wird, z.B. nach Heißbleich-, Unterflottenbleich- oder Imprägnierbleichverfahren. Das erfindungsgemäße Verfahren und die erfindungsgemäßen Stammlösungen sind für die letztgenannte Verfahrensweise besonders gut geeignet.

Besonders vorteilhaft werden für die Herstellung der Bleichflotte und/oder der Stammlösungen oder Verstärkerflotten die obigen konzentrierten Präparate eingesetzt.

Die Bleichbedingungen entsprechen im allgemeinen den üblichen Bleichverfahren, so können z.B. die Temperaturen im Bereich von 15 bis 180°C schwanken, vorzugsweise im Bereich von 40 bis 120°C, die Alkalinität der Bleichflotten - insbesondere der durch einen Gehalt an (P2) und/oder (P3), einem Alkali und einem Bleichmittel auf Peroxydbasis gekennzeichneten alkalischen Peroxyd-Bleichflotten - entspricht vorteilhaft einer NaOH-Konzentration von 0,2 bis 8 %, vorzugsweise 0,3 bis 5 %, besonders 0,4 bis 5 %; die Konzentration der Peroxyverbindungen kann je nach Art des Substrates und des verwendeten Bleichverfahrens stark variieren, z.B. im Bereich von 0,1 bis 20 Gew.-% Peroxyverbindung (vorzugsweise Wasserstoffperoxyd), bezogen auf trockenes Substrat, insbesondere 0,2 bis 10 %, vorzugsweise 0,5 bis 5 % Wasserstoffperoxyd, bezogen auf trockenes Substrat. Für das Bleichen von Textilmaterial nach Imprägnierverfahren wird das Textilmaterial vorteilhaft mit der Bleichflotte imprägniert (z.B. bei 15 bis 40°C) und dann kann die imprägnierte Ware aufgedockt oder aufgerollt kalt verweilen gelassen werden (z.B. bei 15 bis 40°C)

oder einer Hitzebehandlung (z.B. bei 80 bis 120°C, vorzugsweise 90 bis 105°C) unterworfen werden, z.B. nach dem Heißverweil (Pad-roll) Verfahren (z.B. bei 80-100, vorzugsweise 90-100°C) oder nach dem Klotz-Dämpf (pad-steam) Verfahren (z.B. bei 95-105°C, vorzugsweise 96-103°C), und kann dann gespült und getrocknet werden. Die Heißbleiche erfolgt vorteilhaft bei 80-98°C und die Unterflottenbleiche vorteilhaft bei 50-90°C, vorzugsweise 70-80°C. Bei einer Flottenlänge von vorteilhaft 1:5 bis 1:2 liegt der pH-Wert des Bleichbades vorteilhaft bei 8-14, vorzugsweise 9-12.

Mit den erfindungsgemäß einzusetzenden Polymerisaten (P) können sehr konzentrierte und stabile alkalische Stammlösungen hergestellt werden und es können in der Peroxydbleiche von cellulosehaltigem Fasermaterial optimale Weißwerte erreicht werden, ohne daß dabei die Verwendung von anderen sequestrierenden Hilfsmitteln erforderlich wäre, was allerdings nicht ausschließt, daß andere Sequestriermittel zusätzlich verwendet werden können, falls dies für ein bestimmtes Verfahren oder Substrat gewünscht sein sollte. Die erfindungsgemäß einzusetzenden Polymerisate (P) sind mit anderen Sequestriermitteln gut verträglich und können sowohl mit anorganischen Sequestriermitteln, z.B. Boraten oder Silikaten als auch mit organischen Sequestriermitteln, z.B. säuremodifizierten Mono- oder Polyaminen, wie oben unter (G) genannt, oder mit oxysauren Salzen wie Hydroxyalkylidenpolyphosphonsäuredenvaten, Natriumglukonat, -tartrat, -citrat oder -heptonat etc. kombiniert werden. Nach erfolgter Bleiche können die Polymerisate (P2) oder (P3), besonders auch vom gebleichten Substrat, ausgespült oder ausgewaschen werden. Die Polymerisate (P) sind auch gut biologisch abbaubar, so daß sie in der enzymatischen Phase der Abwasserreinigung abgebaut werden können.

In den folgenden Beispielen bedeuten die Teile Gewichtsteile und die Prozente Gewichtsprozente; die Temperaturen sind in Celsiusgraden angegeben. Die in den folgenden Beispielen eingesetzte α-Amylase ist eine handelsübliche α-Amylase mit einer Aktivität von 120 U/g [1U ist die Enzymmenge die bei 37°C, pH 5,6 und einem Calciumgehalt von 0,0043 M in der Flüssigkeit, 5,26 g lösliche Stärke (Merck, Amylum Solubile Erg.B. 6, Charge 9947275) pro Stunde zu Dextrin abbaut, bestimmt an einer Lösung von 6,95 g Trockenstärke/Liter]. Es werden die folgenden wäßrigen Lösungen eingesetzt.

Lösung (m) = 35 %-ige Wasserstoffperoxydlösung
Lösung (n) = 19,5 %-ige Lösung von 2-Chloracrylsäure Natriumsalz
Lösung (p) = 30 %-ige Natriumhydroxydlösung.
Lösung (q) = Lösung von 18,45 Teilen $MgCl_2 \cdot 6H_2O$ in 1000 Teilen Wasser

Beispiel 1

100,0 Teile Kartoffelstärke, nativ, in 100,0 Teilen Wasser dispergiert, werden während 60 Minuten bei pH 6,8 und bei 90°C mit 17,5 Teilen einer wäßrigen 5 %-igen Lösung einer α-Amylase mit einer Aktivität von 120 U/g behandelt. Sodann werden bei 75°C 23,2 Teile Schwefelsäure sowie 9,7 Teile Lösung (m) zugefügt und anschließend in 50 Minuten 112,3 Teile Lösung (n) zudosiert. Nun werden weiter bei 75-80°C innerhalb von 100 Minuten 453,3 Teile der Lösung (n) sowie 38,9 Teile der Lösung (m) gleichzeitig zudosiert und es wird 4 Stunden bei 75-80°C nachgerührt. Danach werden unter Vakuum 166,0 Teile Wasser (mit Spuren Monomer) abdestilliert, dann wird mit Lösung (p) der pH-Wert auf 7,0 eingestellt, das Gemisch auf Raumtemperatur abgekühlt, das Gesamtgewicht mit Wasser auf 900,0 Teilen Endprodukt eingestellt und das Endprodukt ausgeladen.

Beispiel 2

Es wird wie im Beispiel 1 beschrieben vorgegangen, mit dem Unterschied daß keine enzymatische Behandlung durchgeführt wird sondern direkt die Stärkesuspension auf 75°C aufgeheizt wird und nur die Hälfte der jeweiligen Mengen Lösung (m) eingesetzt werden.

Beispiel 3

Es wird wie im Beispiel 2 beschrieben vorgegangen, mit dem Unterschied, daß anstelle von 100,0 Teilen Karfoffelstärke, nativ, in 100 Teilen Wasser dispergiert, 50,0 Teile Amylopectin aus Mais in 50 Teilen Wasser dispergiert eingesetzt werden.

Beispiel 4

Man verfährt wie im Beispiel 3 beschrieben, mit dem Unterschied, daß anstelle von Amylopectin aus Mais, Amylose aus Kartoffelstärke eingesetzt wird.

Beispiel 5

100,0 Teile Kartoffelstärke, nativ, in 100,0 Teilen Wasser dispergiert, werden mit 21,9 Teilen Schwefelsäure sowie 3,3 Teilen Lösung (m) versetzt und auf 75°C erhitzt. Sodann werden innerhalb von 45 Minuten 67,7 Teile der Lösung (n) zugegeben, wobei die Temperatur zwischen 75 und 77°C gehalten wird. Anschließend werden innerhalb von 90 Minuten, gleichzeitig 365,7 Teile der Lösung (n) und 6,6 Teile der Lösung (m) bei der gleichen Temperatur (75-77°C) zudosiert. Nach 4 Stunden Nachrührzeit werden unter Vakuum 166,0 Teile Wasser (mit Spuren Monomer) abdestilliert, dann werden innerhalb von 2 Stunden 144,3 Teile Lösung (p) regelmäßig zugetropft, wobei der pH ca. 9 bis 11 beträgt. Nun wird während 12 Stunden bei 95°C nachgerührt und auf 40°C abgekühlt. Der pH-Wert beträgt sodann ca. 6,5 ± 0,5. Nun werden noch 26,9 Teile Phthalsäureanhydrid und anschließend 53,5 Teile Lösung (p) zugegeben und, sobald das Anhydrid gelöst ist, noch 73,2 Teile Wasser zugefügt. Anschließend wird mit Hilfe von Filtererde über einen Meraklon-Stoff-Filter ausgeladen. Man erhält eine klare, transparente, dunkelbraune Polymerlösung.

Beispiel 6

Es wird wie im Beispiel 1 beschrieben vorgegangen, mit dem Unterschied, daß anstelle von 100,0 Teilen Kartoffelstärke, nativ in 100,0 Teilen Wasser dispergiert, 50,0 Teile Maisstärke in 50,0 Teilen Wasser suspendiert, und, anstelle von 17,5 Teilen der wäßrigen 5 %-igen α-Amylase-Lösung, 17,5 Teile einer wäßrigen 1 %-igen Lösung der gleichen α-Amylase eingesetzt werden und die enzymatische Behandlung nach 30 Minuten durch die Zugabe von Schwelfelsäure gestoppt wird und nur die Hälfte der jeweiligen Mengen Lösung (m) eingesetzt werden.

Beispiel 7

Bis zum Abdestillieren von Wasser (mit Spuren Monomer) wird wie im Beispiel 5 vorgegangen, aber nach der Nachrührzeit von 4 Stunden wird von 75-77°C auf 40°C gekühlt und es werden zwischen 40 und 50°C innerhalb von 2 Stunden 121,11 Teile einer wäßrigen 50 %-igen Kaliumhydroxydlösung zugetropft. Nun wird auf 100°C erhitzt und ohne Vakuum werden innerhalb von 15 Stunden 114,50 Teile Wasser abdestilliert. Nun wird auf 60-65°C gekühlt und, zur Verbesserung der Eigenfarbe, werden 18,61 Teile Lösung (m) zugegeben und nach einer Nachrührzeit von 2 Stunden bei 60-65°C, wird auf Raumtempertur abgekühlt und anschließend der pH-Wert mit geringen Mengen Kaliumhydroxydlösung auf 7,0 eingestellt. Nun werden noch 70 Teile einer wäßrigen 40 %-igen Lösung von Nitrilotriessigsäure-Trinatriumsalz zugefügt und es wird über einen Meraklon-Stoff-Filter mit Hilfe von Filtererde ausgeladen.

Beispiel 8

Es wird vorgegangen wie im Beispiel 7 beschrieben, aber anstelle von 114,50 Teilen Wasser werden nun 57,0 Teile Wasser innerhalb von 7 Stunden abdestilliert. Nach dem Abdestillieren des Wassers wird auf Raumtemperatur abgekühlt und der pH-Wert auf 7,0 eingestellt. Nun werden noch 15 Teile Magnesiumchlorid-Hexahydrat zugefügt und anschließend wird über einen Meraklon-Stoff-Filter mit Hilfe von Filtererde ausgeladen.

Beispiel 9

Es wird vorgegangen wie im Beispiel 7 beschrieben, aber anstelle von 70 Teilen einer wäßrigen 40 %-igen Lösung von Nitrilotriessigsäure-Trinatriumsalz werden 35 Teile Triäthanolamin zugetropft.

Beispiel 10

Es wird vorgegangen wie im Beispiel 8 beschrieben, aber zusätzlich zu den 15 Teilen Magnesiumchlorid-Hexahydrat werden noch 35 Teile einer wäßrigen 40 %-igen Lösung von Nitrilotriessigsäure-Trinatriumsalz zugetropft.

Beispiel 11

100,0 Teile Kartoffelstärke, nativ, in 70,0 Teilen Wasser dispergiert, werden mit 44,3 Teilen Citronensäure-Monohydrat versetzt und auf 95°C erhitzt. Nach 3 Stunden bei dieser Temperatur wird auf 75°C gekühlt und sodann werden gleichzeitig in 150 Minuten 528,8 Teile der Lösung (n) und 22,7 Teile der Lösung (m) zudosiert. Nach 4 Stunden Nachrührzeit bei 75-80°C werden unter Vakuum 55,5 Teile Wasser abdestilliert. Sodann wird bei ca. 50-60°C der pH-Wert mit Hilfe von ca. 141,8 Teilen Lösung (p) auf 7,0 eingestellt, dann werden noch ca. 2,4 Teile Lösung (m) zugefügt, das Gemisch wird auf Raumtemperatur abgekühlt und das Gesamtgewicht wird mit Wasser auf 868,0 Teile Endprodukt

eingestellt.

Beispiel 12

Es wird vorgegangen, wie in Beispiel 11 beschrieben, aber es werden 22,6 Teile Schwefelsäure anstelle von 44,3 Teilen Citronensäure-Monohydrat verwendet. Dadurch braucht man ca. 123,1 Teile Lösung (p), um den pH-Wert auf 7,0 einzustellen. Das Gesamtgewicht des Endproduktes wird auch auf 868,0 Teile eingestellt.

Applikationsbeispiel A

100 % Baumwolle, entschlichtet und abgekocht, wird mit einem pick-up von 100 % mit folgenden Bleichflotten foulardiert:

| | |
|---|---|
| 10 ml/l | Lösung (q) (entsprechend einer Bleichflotte von 5°dH) |
| 4 ml/l | Netzmittel (konzentrierte Lösung von Phosphorsäurepartialestern von teilweise dioxäthylierten $C_{8-11}$-Alkoholen, Na-Salz) |
| x ml/l | Produkt gemäß Beispiel 1 |
| 15 ml/l | Lösung (p) |
| 30 ml/l | Lösung (m). |

Danach wird nach dem Pad-Roll-Verfahren das foulardierte Gewebe während 90 Minuten bei 95°C verweilen gelassen. Anschließend wird warm und kalt gespült bis zum neutralen pH.
x = 5,10 oder 15.
Es werden hohe Weißgradeffekte erhalten, die je nach Produktmenge sich schön abgrenzen.

Applikationsbeispiel B

Es wird wie im Applikationsbeispiel A vorgegangen, aber es werden in der Bleichflotte

20 ml/l Lösung (p) (anstelle von 15)
und 40 ml/l Lösung (m) (anstelle von 30)

eingesetzt und anstelle des Pad-Roll wird das Pad-Steam-Verfahren (Behandlung bei 103°C während 20 Minuten) verwendet. Es werden auch hohe Bleicheffekte erhalten.

Applikationsbeispiel C

Es wird wie im Applikationsbeispiel B vorgegangen aber die Bleichflotte wird aus einer fünffachen Verstärkerflotte hergestellt:
Vorerst wird eine Verstärkerflotte von

| | |
|---|---|
| 10 ml/l | Lösung (q) |
| 20 ml/l | Netzmittel |
| 100 ml/l | Lösung (p) |
| 200 ml/l | Lösung (m) |
| 5 · x ml/l | Produkt gemäß Beispiel 1 |

hergestellt, wovon ein Fünftel (200 ml) mit 800 ml einer Lösung von 10 ml/l Lösung (q) verdünnt wird. Die verdünnte Bleichflotte wird sodann wie im Applikationsbeispiel B verwendet. Es werden ähnlich gute Weißeffekte erhalten.
Analog wie das Produkt gemäß Beispiel 1 werden in einem jeden der Applikationsbeispiele A, B und C die Produkte der Beispiele 2 bis 12 eingesetzt.

## Patentansprüche

1. Polymerisat (P) auf (Co)poly-α-hydroxyacrylsäurebasis gegebenenfalls in lactonisierter Form oder in Salzform,

gekennzeichnet durch einen Gehalt an

(s) mindestens einer Kohlehydrateinheit
und (a) mindestens einer 2-Hydroxy-2-carboxyäthylen-1,2 Einheit,

oder ein Gemisch solcher Polymerisate (P).

**2.** Polymerisat (P) gemäß Anspruch 1 zusätzlich enthaltend
(b) mindestens eine von (a) verschiedene Comonomereinheit.

**3.** Polymerisat (PI) welches ein Polymerisat (P) gemäß Anspruch 1 oder 2 ist, worin die $\alpha$-Hydroxyacrylsäureeinheiten mindestens teilweise lactonisiert sind.

**4.** Polymerisat (P2) welches ein Polymerisat (P) gemäß Anspruch 1 oder 2 ist, worin die $\alpha$-Hydroxyacrylsäureeinheiten mindestens teilweise in Salzform vorliegen.

**5.** Magnesiumkomplex (P3) von (P) oder (P2), wobei (P) bzw. (P2) wie in einem der Ansprüche 1 bis 4 definiert ist.

**6.** Verfahren zur Herstellung eines Polymerisates (P1) oder eines Gemisches von Polymerisaten (PI) gemäß einem der Ansprüche 1 bis 3, dadurch gekennzeichnet, daß man mindestens ein Monomeres (A), welches die Monomereinheiten (a) liefert, und gegebenenfalls mindestens ein weiteres Vinylmonomeres (B) in Gegenwart mindestens eines gegebenenfalls modifizierten Kohlehydrates (S), welches die Einheiten (s) liefert, unter sauren Bedingungen polymerisiert.

**7.** Verfahren zur Herstellung der Polymerisate (P2) gemäß Anspruch 4, dadurch gekennzeichnet, daß man gemäß Anspruch 6 verfährt und das Polymerisationsprodukt mit mindestens einer Base, zur Salzbildung, umsetzt.

**8.** Verfahren zur Herstellung von Magnesiumkomplexen (P3) gemäß Anspruch 5, dadurch gekennzeichnet, daß man gemäß Anspruch 6 oder 7 verfährt und das Polymerisationsprodukt mit mindestens einem Magnesiumsalz versetzt.

**9.** Produkt erhältlich nach dem Verfahren gemäß einem der Ansprüche 6 bis 8.

**10.** Wäßrige Verdünnung eines Polymerisates (P), (P2) oder (P3) welches wie in einem der Ansprüche 1 bis 5 oder 9 definiert ist, oder eines Gemisches von solchen Polymerisaten (P).

**11.** Konzentriertes wäßriges Präparat enthaltend (P2) und/oder (P3) gemäß einem der Ansprüche 1, 2, 4, 5 oder 9 mit einer Konzentration an (P2) bzw. (P3) im Bereich von 2 bis 70 Gew.-% auf (P2) bezogen.

**12.** Konzentrierte, wäßrige, alkalische, stabilisatorhaltige Lösungen, die durch einen Gehalt an den Komponenten

(P) gemäß Anspruch 1 oder 2, vorzugsweise als (P2) gemäß Anspruch 4 oder (P3) gemäß Anspruch 5,
und (D) Alkalimetallhydroxyd

gekennzeichnet sind, wobei der (P)-Gehalt im Bereich von 1 bis 50 g/l, auf (P2) bezogen, liegt.

**13.** Konzentrierte, wäßrige, alkalische, stabilisatorhaltige Lösungen gemäß Anspruch 12, die zusätzlich mindestens eine der folgenden Komponenten

(E) mindestens ein wasserlösliches Magnesiumsalz,
(F) mindestens ein Tensid
und (G) mindestens ein von (P) verschiedenes Sequestriermittel

enthalten.

**14.** Konzentrierte, wäßrige, alkalische, stabilisatorhaltige Lösungen gemäß Anspruch 12 oder 13, die zusätzlich
(H) ein Bleichmittel auf Peroxydbasis
enthalten.

**15.** Konzentrierte, wäßrige, alkalische, stabilisatorhaltige Lösungen gemäß einem der Ansprüche 12 bis 14, welche alkalische Stammlösungen oder Verstärkerflotten für die Peroxydbleiche sind, gekennzeichnet durch einen Gehalt an (P2) und/oder (P3) gemäß einem der Ansprüche 1, 2, 4, 5 oder 9.

**16.** Alkalische Peroxyd-Bleichflotten gekennzeichnet durch einen Gehalt an (P2) und/oder (P3) gemäß einem der Ansprüche 1, 2, 4, 5 oder 9, einem Alkali und einem Bleichmittel auf Peroxydbasis und gegebenenfalls weiteren Zusätzen, wobei der Alkaligehalt 0,4 % bis 5 % NaOH entspricht.

**17.** Verwendung von (P2) oder (P3), definiert wie in einem der Ansprüche 1, 2, 4, 5 oder 9 als Hilfsmittel für die Behandlung von faserigen Substraten.

**18.** Verwendung nach Anspruch 17 als Stabilisator bei Bleichverfahren in welchen mit Peroxyden, insbesondere $H_2O_2$, gebleicht wird.

**19.** Verwendung nach Anspruch 17 oder 18, dadurch gekennzeichnet, daß (P2) und/oder (P3) in Form von konzentriertem Präparat gemäß einem der Ansprüche 11 bis 14 oder von Stammlösung oder Verstärkerflotte gemäß Anspruch 15 zugegeben wird.

## Claims

**1.** (Co)poly-α-hydroxyacrylic-acid-based polymer (P) optionally in lactonized form or in salt form, characterised by a content in

(s) at least one carbohydrate unit
and (a) at least one 2-hydroxy-2-carboxyethylene-1,2 unit,

or a mixture of such polymers (P).

**2.** Polymer (P) according to Claim 1 additionally containing
(b) at least one comonomer unit different from (a).

**3.** Polymer (P1) which is a polymer (P) according to Claim 1 or 2, in which the α-hydroxyacrylic acid units are at least in part lactonized.

**4.** Polymer (P2) which is a polymer (P) according to Claim 1 or 2, wherein the α-hydroxyacrylic acid units are present at least in part in salt form.

**5.** Magnesium complex (P3) of (P) or (P2), wherein (P) or respectively (P2) are defined as in any one of Claims 1 to 4.

**6.** Process for the production of a polymer (P1) or of a mixture of polymers (P1) according to any one of Claims 1 to 3, characterised in that at least one monomer (A), which provides the monomer units (a), and optionally at least one further vinylic monomer (B), is polymerised under acidic conditions in the presence of at least one optionally modified carbohydrate (S), which provides the units (s).

**7.** Process for the production of polymers (P2) according to Claim 4, characterised by proceeding according to Claim 6 and reacting the polymerisation product with at least one base for salt formation.

**8.** Process for the production of magnesium complexes (P3) according to Claim 5, characterised by proceeding according to Claim 6 or 7 and treating the polymerisation product with at least one magnesium salt.

**9.** Product obtainable by the process according to any one of Claims 6 to 8.

**10.** Aqueous dilution of a polymer (P), (P2) or (P3) which is defined as in any one of Claims 1 to 5 or 9, or of a mixture of such polymers (P).

**11.** Concentrated aqueous composition containing (P2) and/or (P3) according to any one of Claims 1, 2, 4, 5 or 9, with a concentration of (P2) or respectively (P3) in the range of 2 to 70 % by weight referred to (P2).

12. Concentrated, aqueous, alkaline, stabiliser-containing solutions, which are characterised by a content in components

    (P) according to Claim 1 or 2, preferably as (P2) according to Claim 4 or (P3) according to Claim 5,
    and (D) alkali metal hydroxide,

    the (P)-content being in the range of 1 to 50 g/l, referred to (P2).

13. Concentrated, aqueous, alkaline, stabiliser-containing solutions according to Claim 12, which additionally contain at least one of the following components

    (E) at least one water soluble magnesium salt,
    (F) at least one surfactant
    and (G) at least one sequestering agent different from (P).

14. Concentrated, aqueous, alkaline, stabiliser-containing solutions according to Claim 12 or 13, which additionally contain
    (H) a peroxide-based bleaching agent.

15. Concentrated, aqueous, alkaline, stabiliser-containing solutions according to any one of Claims 12 to 14, which are alkaline stock solutions or reinforcing liquors for the peroxide bleach, characterised by a content in (P2) and/or (P3) according to any one of Claims 1, 2, 4, 5 or 9.

16. Alkaline peroxidic bleaching liquors characterised by a content in (P2) and/or (P3) according to any one of Claims 1, 2, 4, 5 or 9, an alkali and a peroxide-based bleaching agent and optionally further additions, wherein the alkali content corresponds to 0.4 % to 5 % NaOH.

17. Use of (P2) or (P3), defined as in any one of Claims 1, 2, 4, 5 or 9, as adjuvants for the treatment of fibrous substrates.

18. Use according to Claim 17 as a stabiliser in bleaching processes in which there is bleached with peroxides, in particular $H_2O_2$.

19. Use according to Claim 17 or 18, characterised in that (P2) and/or (P3) are added in the form of a concentrated composition according to any one of Claims 11 to 14 or of a stock solution or reinforcing liquor according to Claim 15.

**Revendications**

1. Produit de polymérisation (P) à base d'acide (co)poly-a-hydroxyacrylique éventuellement sous forme de lactone ou sous forme de sel, caractérisé par une teneur en

    (s) au moins une unité d'hydrate de carbone
    et (a) au moins une unité 2-hydroxy-2-carboxyéthylénique-1,2,

    ou un mélange de tels produits de polymérisation (P).

2. Produit de polymérisation (P) selon la revendication 1 contenant en outre
    (b) au moins une unité comonomère différente de (a).

3. Produit de polymérisation (P1) qui est un produit de polymérisation (P) selon la revendication 1 ou 2, dans lequel les unités d'acide α-hydroxyacrylique sont au moins en partie sous forme de lactone.

4. Produit de polymérisation (P2) qui est un produit de polymérisation (P) selon la revendication 1 ou 2, dans lequel les unités d'acide α-hydroxyacrylique sont au moins en partie sous forme de sel.

5. Complexe de magnésium (P3) de (P) ou de (P2), dans lequel (P) ou respectivement (P2) est tel que défini à l'une des revendications 1 à 4.

**6.** Procédé de préparation d'un produit de polymérisation (P1) ou d'un mélange de produits de polymérisation (P1) selon l'une des revendications 1 à 3, caractérisé en ce qu'on polymérise sous des conditions acides au moins un monomère (A), qui fournit les unités monomères (a), et éventuellement au moins un autre monomère vinylique (B), en présence d'au moins un hydrate de carbone (S) éventuellement modifié qui fournit les unités (s).

**7.** Procédé de préparation des produits de polymérisation (P2) selon la revendication 4, caractérisé en ce qu'on procède selon la revendication 6 et qu'on fait réagir le produit de polymérisation avec au moins une base, pour la formation de sel.

**8.** Procédé de préparation des complexes de magnésium (P3) selon la revendication 5, caractérisé en ce qu'on procède selon la revendication 6 ou 7 et qu'on ajoute au moins un sel de magnésium au produit de polymérisation.

**9.** Produit pouvant être obtenu d'après le procédé selon l'une des revendications 6 à 8.

**10.** Dilution aqueuse d'un produit de polymérisation (P), (P2) ou (P3) tel que défini à l'une des revendications 1 à 5 ou 9, ou d'un mélange de tels produits de polymérisation (P).

**11.** Préparation aqueuse concentrée contenant (P2) et/ou (P3) selon l'une des revendications 1, 2, 4, 5 ou 9, et ayant une concentration en (P2) ou respectivement (P3) comprise entre 2 et 70% en poids rapportée à (P2).

**12.** Solutions alcalines, aqueuses, concentrées, contenant un stabilisant, qui sont caractérisées par une teneur en composants

(P) selon la revendication 1 ou 2, de préférence en tant que (P2) selon la revendication 4 ou en tant que (P3) selon la revendication 5,
et (D) un hydroxyde de métal alcalin,

la teneur en (P) étant comprise entre 1 et 50g/l, rapportée à (P2).

**13.** Solutions alcalines, aqueuses, concentrées, contenant un stabilisant, selon la revendication 12, qui contiennent en outre au moins un des composants suivants

(E) au moins un sel de magnésium soluble dans l'eau,
(F) au moins un agent tensio-actif
et (G) au moins un agent séquestrant différent de (P).

**14.** Solutions alcalines, aqueuses, concentrées, contenant un stabilisant, selon la revendication 12 ou 13, qui contiennent en outre
(H) un agent de blanchiment à base de peroxyde.

**15.** Solutions alcalines, aqueuses, concentrées, contenant un stabilisant, selon l'une des revendications 12 à 14, qui sont des solutions mères alcalines ou des solutions alcalines de renforcement pour le blanchiment aux peroxydes, caractérisées par un teneur en (P2) et/ou (P3) selon l'une des revendications 1, 2, 4, 5 ou 9.

**16.** Bains alcalins de blanchiment aux peroxydes, caractérisés par une teneur en (P2) et/ou (P3) selon l'une des revendications 1, 2, 4, 5 ou 9, en alcali et en agent de blanchiment à base de peroxyde et éventuellement en d'autres additifs, la teneur en alcali correspondant à 0,4% jusqu'à 5% de NaOH.

**17.** Utilisation de (P2) ou (P3), tels que définis à l'une des revendications 1, 2, 4, 5 ou 9, comme agents auxiliaires pour le traitement des substrats fibreux.

**18.** Utilisation selon la revendication 17 comme stabilisant dans les procédés de blanchiment dans lesquels on blanchit avec des peroxydes, en particulier $H_2O_2$.

**19.** Utilisation selon la revendication 17 ou 18, caractérisée en ce que (P2) et/ou (P3) sont ajoutés sous forme d'une préparation concentrée selon l'une des revendications 11 à 14 ou sous forme d'une solution mère ou d'une solution de renforcement selon la revendication 15.